# EUROPEAN PATENT APPLICATION

(11) **EP 4 822 295 A1**
(43) Date of publication of application: **14.10.2026**
(21) Application number: 26171405.9
(22) Date of filing: 09.04.2026
(51) Int. Cl.: G01C 15/02

(54) **SYSTEM AND METHOD FOR PROJECTING CONSTRUCTION LAYOUT CONTENT VIA A LASER REFERENCE PLANE FOR OBSTRUCTED LINE-OF-SIGHT MARKING**

(30) Priority: 11.04.2025 US 202563787063 P
(71) Applicant: Lightyx Systems Ltd., 6936228 Tel Aviv (IL)
(72) Inventor: ELRAN, Tomer Shaul, 6936228 C/O LIGHTYX SYSTEMS LTD, 24 Shay Agnon St,Tel Aviv (IL); YEHUDAY, Uri, 6936228 C/O LIGHTYX SYSTEMS LTD, 24 Shay Agnon St,Tel Aviv (IL); SELA, Chen, 6936228 C/O LIGHTYX SYSTEMS LTD, 24 Shay Agnon St,Tel Aviv (IL); SPILMAN, Reut, 6936228 C/O LIGHTYX SYSTEMS LTD, 24 Shay Agnon St,Tel Aviv (IL); PITERMAN, Naor, 6936228 C/O LIGHTYX SYSTEMS LTD, 24 Shay Agnon St,Tel Aviv (IL)
(74) Representative: Pearl Cohen UK

(57) **Abstract**

A method and system for projecting content onto a surface at a construction site. The system may include: a low divergence light source projector having a known position and orientation at the construction site; a laser level arranged to produce a virtual laser plane substantially parallel to the surface; and a jig, wherein the low divergence light source projector is arranged to project content onto an intersection point of the virtual laser plane and a straight line substantially perpendicular to the virtual surface and coming from a position on the surface intended for the projected content, and wherein the jig comprises: means for identifying said intersection point; and means for indicating the position on the surface intended for the projected content, or a reference point having a known offset to said position on the surface.

## Description

### FIELD OF THE INVENTION

The present invention relates generally to projecting content onto surfaces in a construction site and, more particularly, to systems, devices, and techniques that control a low-divergence projector and cooperate with a laser level and a jig to physically transfer intended locations to a physical surface when a line-of-sight from the projector to the intended locations is obstructed

### BACKGROUND OF THE INVENTION

Modern building techniques used in construction may employ projection and survey systems, such as laser projectors and laser levels, to mark accurate points, shapes, or other construction information on floors, ceilings, walls, decks, and other surfaces within a construction site. Such systems may rely on reference features within the construction site to perform a registration process and thereby determine a position and orientation of the projection system in a site coordinate frame so that projected information aligns with the construction plan.

In some installations, a projector is registered and stationed with a known pose relative to the construction site and may access a construction plan model describing surfaces and surrounding elements. The projector may then project, onto a selected surface, content corresponding to the construction plan, including points, lines, shapes, boundaries, and patterns indicating intended locations of construction elements such as openings, pipes, hangers, anchors, penetrations, borders, and the like.

Projection of such content may assist builders in orienting within the construction site and carrying out building tasks associated with the projected content, for example marking, drilling, cutting, fastening, or installing building components at locations indicated by the projection, a process commonly referred to as setting out.

However, accurate projection can be limited when the target surface is non-planar or uneven, when the surface includes recesses or protrusions, or when the line-of-sight from the projector to an intended location on the surface is partially or fully obstructed, such that the projector cannot directly illuminate the intended location. In these situations, projected content may land on a different location than intended or may be distorted.

For example, when the intended location is behind a beam, duct, support member, or other obstruction, a projected beam may intersect the obstruction and/or may reach a different visible region, preventing a user from reliably transferring the intended location to the actual surface. Similar challenges may be present for corrugated metal decks or other surfaces having height variations, where a projection on one surface elevation does not correspond to the same plan location on another elevation.

Some known approaches employ one or more auxiliary devices that communicate with the projector and receive, in real time, coordinates of each intended point to be marked. The auxiliary devices may then indicate the intended point despite the obstructed line-of-sight. Such approaches can require (i) a communication link with the projector; (ii) real-time guidance for each point; and/or (iii) complex workflows and equipment, which can increase cost, reduce robustness on construction sites, and slow down the setting-out process.

### SUMMARY OF THE INVENTION

In order to address the aforementioned challenges, some embodiments provide a practical technique that uses a virtual reference plane, physically generated at a construction site by laser level, as an intermediate projection surface for content intended for a target surface location that has an obstructed line-of-sight to a projector. The projector may be a laser projector or another low-divergence light source projector that emits a beam forming visible projected marks or patterns. References to a laser herein may include other low-divergence light sources suitable for producing visible projected marks or patterns. In some embodiments, the technique improves accuracy and repeatability of physically transferring intended locations to the target surface and reduces rework, by enabling marking of intended locations that cannot be directly illuminated by the projector.

In some embodiments, a laser level produces a virtual plane (also referred to herein as a virtual laser plane) at a known position relative to the construction site and, in some implementations, at a known distance from a target surface. The plane may be arranged substantially parallel to the target surface, although other orientations are possible. A projector having a known pose at the construction site controlled to project the content onto a point on the virtual plane. The point on the virtual plane may be computed as an intersection of (i) the virtual plane and (ii) a line that corresponds to an intended location on the target surface and is substantially perpendicular to the. By projecting onto the virtual plane and using a jig as described herein, the system enables a user to mark, on the target surface, the intended location corresponding to the projected content even when a direct line-of sight from projector to the location is obstructed.

In some embodiments, a jig is used at the construction site to identify an intersection point of (i) a projected beam corresponding to the content and (ii) a beam produced by the laser level defining the virtual plane. When the jig is positioned at the intersection point, the jig on the target surface the intended location for the content, or a reference location having a known offset from the intended location, thereby enabling physical marking of the intended location. The jig may be hand-held and may be stick-like, having a distal end for placement at or near the intersection point and a proximal end used to indicate the intended location, for example by a mechanical pointer and/or emitting a marking beam directed toward the target surface.

Embodiments provide a technical system for projecting content onto a physical surface at a construction site. The system may include: (i) a low-divergence light source projector having a known position and orientation at the construction site; (ii) a laser level arranged to generate a virtual reference plane physically present in construction site; and (iii) a jig. The projector may be arranged to project content as visible marks or patterns onto an intersection point of the virtual reference plane and a line corresponding to an intended position on the surface, the line being substantially perpendicular to the virtual reference plane and passing through the intended position.

The jig may comprise (a) structure for identifying the intersection point, including by detecting overlap between a beam from the projector and a beam defining the virtual reference plane, and (b) structure for indicating, on the surface, the intended position or a reference position having a known offset to the intended position, including by emitting a marking beam and/or by providing a visual or mechanical indication to a user. The system thereby provides a concrete improvement in construction site projection workflows by enabling accurate physical transfer of intended positions to the surface even when the intended position has an obstructed line-of-sight to the projector.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which
**Figure 1** is a high-level block diagram illustrating a system for projecting content onto a surface in accordance with some embodiments of the present invention;
**Figure 2** is a high-level flowchart illustrating a method of projecting content onto a surface in accordance with some embodiments of the present invention; and
**Figures 3A** and **3B** are diagrams illustrating examples for systems for projecting content onto a surface in accordance with some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well-known features may be omitted or simplified in order not to obscure the present invention.

Unless specifically stated otherwise, as apparent from the following discussions, it is appreciated that throughout the specification discussions utilizing terms such as "processing", "computing", "calculating", "determining", "commanding", or the like, refer to actions and/or processes performed by a controller or other computing device that is operatively coupled to physical components including at least a projector and, in some embodiments, at least one sensor associated with a jig and/or a laser level. Such actions and/or processes include generating control signals that cause the projector to physically project visible marks or patterns at computed locations and, in some embodiments, generating guidance outputs that assist physical placement of the jig at an intersection point defined by overlapping of projected beams.

In the foregoing detailed description, numerous specific details are set forth in order to provide an understanding of the invention. However, it will be understood by those skilled in the art that the invention can be practiced without these specific details. In other instances, well-known methods, procedures, and components, modules, units, and/or circuits have not been described in detail so as not to obscure the invention. Some features or elements described with respect to one embodiment can be combined with features or elements described with respect to other embodiments.

It is further understood that some embodiments of the present invention may be embodied in the form of a system, a method, or a computer program product implemented to control physical projection hardware and to cooperate with construction site instruments. Similarly, some embodiments may be embodied as hardware, software, or a combination of both. Some embodiments may be embodied as a computer program product saved on one or more non-transitory computer-readable medium (or media) in the form of computer-readable program code embodied thereon. Such non-transitory computer-readable medium may include instructions that when executed cause a processor to execute operations that result in physical projection of content by a projector, generation and/or use of a physically generated virtual reference plane, and indication of intended locations on a physical surface using a jig, in accordance with embodiments. In some embodiments, the instructions stored on the computer-readable medium may be in the form of an installed application and in the form of an installation package.

Such instructions may be, for example, loaded by one or more processors and get executed. For example, the computer-readable medium may be a non-transitory computer-readable storage medium. A non-transitory computer-readable storage medium may be, for example, an electronic, optical, magnetic, electromagnetic, infrared, or semiconductor system, apparatus, or device, or any combination thereof.

In the foregoing detailed description, numerous specific details are set forth in order to provide an understanding of the invention. However, it will be understood by those skilled in the art that the invention can be practiced without these specific details. In other instances, well-known methods, procedures, and components, modules, units, and/or circuits have not been described in detail so as not to obscure the invention. Some features or elements described with respect to one embodiment can be combined with features or elements described with respect to other embodiments.

Embodiments of the present invention provide a system for projecting content onto a surface at a construction site, including in scenarios where an intended location on the surface has an obstructed line-of-sight to a projector. The system may include: a low-divergence light source projector having a known pose at the construction site; a laser level arranged to generate a virtual reference plane; and a jig.

The projector may be controlled, for example by a controller executing software, to project the content onto an intersection point on the virtual reference plane, the intersection point corresponding to the intended location on the surface along a line substantially perpendicular to the virtual reference plane and passing through the intersection point. The jig may be configured to be positioned at the intersection point and to indicate the intended location on the surface, or a reference location having a known offset from the intended location.

In some embodiments, the jig includes a detector configured to detect overlap between (i) a beam from the projector corresponding to the content and (ii) a beam from the laser level defining the virtual reference plane, and the jig additionally includes an indicator configured to output a marking beam toward the surface. The jig may further include a leveling element (for example, a bubble level, a plumb bob, or an inertial measurement unit) to assist alignment of the jig along the line substantially perpendicular to the virtual reference plane.

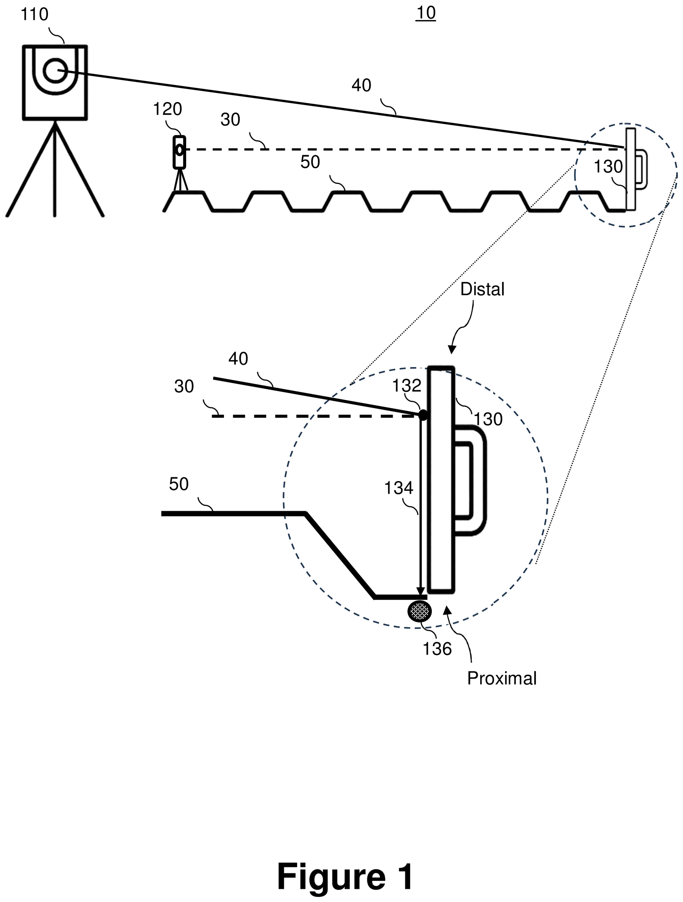

**Figure 1** is a high-level block diagram illustrating, by way of example, a system for projecting content onto a target surface in a construction scene, in which an intended location on the target surface has an obstructed line-of-sight from a projector. The figure illustrates use of a virtual reference plane generated by a laser level, and a jig used to identify an intersection point between the projected beam and the virtual reference plane and to indicate the intended location on the target surface.

In accordance with some embodiments, a projector (for example, a laser projector or another low-divergent light-source projector) is deployed in a construction site and has a known position and orientation, for example obtained through registration relative to site reference features and/or a construction plan model. The system may further include a laser level (also referred to herein as a laser level scanner) arranged to generate a virtual plane. In some implementations the virtual plane is substantially parallel to a target surface on which content is intended to be marked and may be offset from the target surface by a known distance. The system may include at least one jig, which in a simple form may be a hand-held, stick-like device having a distal end and a proximal end.

In operation, the projector projects, via a projected beam corresponding to the content, onto an intersection point on the virtual plane. The intersection point may be selected such that it corresponds to an intended location on the target surface along a line substantially perpendicular to the virtual plane, where the intended location may have an obstructed line-of-sight to the projector.

In some embodiments, the intersection point is computed as an intersection between the virtual plane and the line substantially perpendicular to the virtual plane that passes through the intended location on the target surface. The projected content may include a point feature, a marker, a crosshair, a symbol, or a portion of a construction plan pattern.

According to some embodiments, the jig includes means for identifying the intersection point and means for indicating the intended location on the target surface or the reference location having the known offset. The identifying function may be implemented by aligning the distal end of the jig with the intersection point based on visual observation of beam overlap and/or based on output from one or more sensors on the jig. The indicating function may be implemented by a visual pointer, a mechanical pointer, a marking aperture, a plumb element, and/or a marking beam emitted from the jig.

In one embodiment, the jig is positioned such that its distal end is located at or near the intersection point by placing the distal end at a location where the projected beam from the projector and a beam defining the virtual plane overlap. When so positioned, the jig indicates the intended location on the target surface by defining the line substantially perpendicular to the virtual plane through the intersection point and transferring that line to the target surface.

In some embodiments, the jig is oriented so that a longitudinal axis of the jig is substantially aligned with the line substantially perpendicular to the virtual plane, and the proximal end of the jig points toward the target surface at the intended location, thereby enabling a user to mark the intended location. In other embodiments, the jig emits a marking beam toward the target surface to indicate the intended location or the reference location.

According to some embodiments, the jig includes a levelling element configured to assist alignment of the jig relative to gravity and/or relative to the virtual plane, including for aligning the jig along the line substantially perpendicular to the virtual plane. The leveling element may be implemented as a bubble level, a laser-based level, a plumb bob, an inertial measurement unit, or a gravity-referenced electronic level. In some embodiments, the jig includes an indicator for the intended location implemented as a laser marker directed toward the target surface, and in other embodiments the jig provides a visual or mechanical cue that allows a human user to mark the surface.

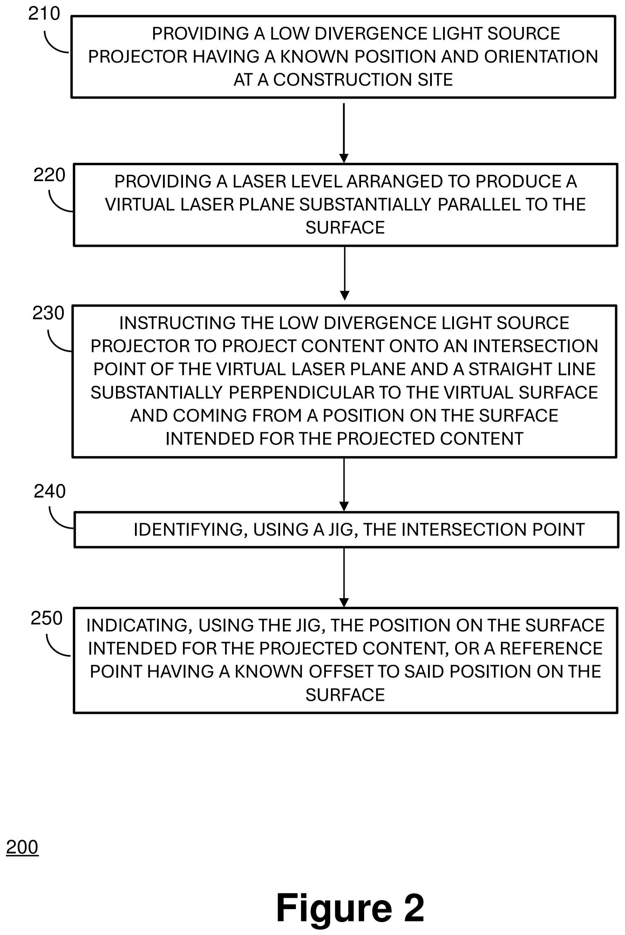

**Figure 2** is a high-level flowchart illustrating method of projecting content onto a surface at a construction site. Method **200** may include the following steps: providing a low divergence light source projector having a known position and orientation at the construction site **210;** providing a laser level arranged to produce a virtual laser plane substantially parallel to the surface **220;** instructing the low divergence light source projector to project content onto an intersection point of the virtual laser plane and a straight line substantially perpendicular to the virtual surface and coming from a position on the surface intended for the projected content **230;** identifying, using a jig, said intersection point **240;** and indicating, using the jig, the position on the surface intended for the projected content, or a reference point having a known offset to said position on the surface **250.**

According to some embodiments, instructing or controlling the projector to project the content onto the intersection point is implemented using a controller including one or more processors executing software stored in memory. The software may compute, from a construction plan model and a known pose of the projector, an intended location on a target surface and a corresponding intersection point on the virtual plane and may command the projector by issuing control signals to project the content as visible marks or patterns at the intersection point. The software may additionally provide user guidance for physically positioning the jig at the intersection point, for example based on beam overlap detection at the jig.

According to some embodiments, positioning the jig at the intersection point is performed semi-automatically by an operator moving the jig within the construction scene until the operator observes overlap between (i) the projected beam from the projector and (ii) a beam defining the virtual plane. Alternatively, positioning is performed at least partially automatically by providing one or more sensors on the jig configured to detect beam overlap and/or to provide directional guidance indicating how to move the jig toward the intersection point where the beams overlap. The sensors may include, for example, a photosensor, a camera, a quadrant photodiode, and/or an optical filter configured to discriminate between wavelengths of the projector and the laser level, thereby improving robustness of detection under construction site lighting conditions.

According to some embodiments, the jig has two functional units: a first unit configured to assist in identifying the intersection point on the virtual plane and a second unit configured to indicate an intended location on the target surface or a reference location having a known offset from the intended location. The first unit may include a detector, a display, and/or a target feature for alignment with the beam overlap. The second unit may include a laser pointer or another marking emitter configured to emit a marking beam toward the target surface, and/or may include a mechanical pointer, a plumb element, or an aperture configured to indicate the location.

According to some embodiments, indicating the intended location on the surface may be implemented by defining the line substantially perpendicular to the virtual plane passing through the intersection point and transferring that line to the surface. The transfer may be performed using a gravitational reference such as a plumb element and/or using an electronic leveling element, depending on whether the surface is a ceiling, a floor, a wall, or another non-horizontal surface. In some embodiments, the jig emits a marking beam substantially perpendicular to a longitudinal axis of the jig when the jig is positioned at the intersection point, to indicate the intended location or the reference location.

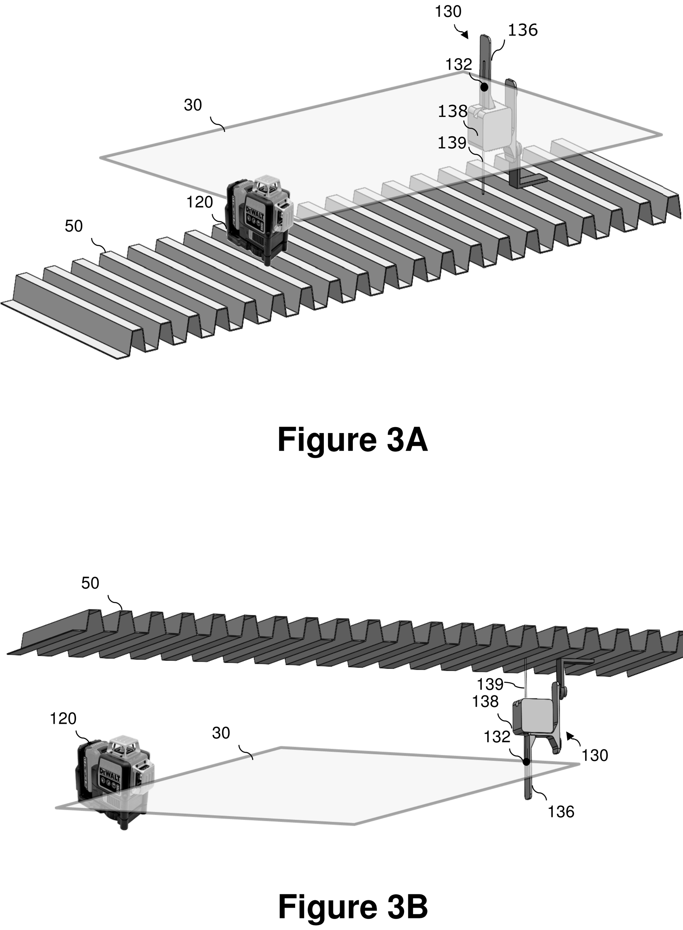

**Figure 3A** and **Figure 3B** illustrate example implementations of a jig and interaction between the jig, the virtual reference plane, and a projector beam. In some embodiments, a system for projecting content onto a target surface at a construction site includes: a low-divergent light source projector having a known pose; a laser level arranged to generate a virtual reference plane; and a jig.

The projector projects content onto an intersection point of the virtual reference plane and a line substantially perpendicular to the virtual reference plane and passing through an intended location on the target surface. The jig is configured to identify the intersection point, for example using a display, a screen, and/or one or more sensors, and to indicate a position on the target surface intended for the projected content, or a reference position having a known offset therefrom. In some embodiments, the jig produces a marking beam directed toward the target surface, and the marking beam is substantially perpendicular to a longitudinal axis of the jig when the jig is positioned at the intersection point.

As illustrated in the figures, the target surface may be a floor, a ceiling, a wall, a deck (including a corrugated metal deck), or another physical surface at the construction site. The target surface may be planar or non-planar, and the intended location on the target surface may have a direct line-of-sight to the projector or may have a partially or fully obstructed line-of-sight. The virtual reference plane is physically generated by the laser level as a visible reference plane in the construction site and may be selected substantially parallel to the target surface and optionally at a known distance from the target surface. The combination of (i) projecting the content onto the virtual reference plane and (ii) using the jig to indicate the corresponding intended location (or a reference location having a known offset) on the target surface provides a practical, hardware-based technique for physically transferring intended locations to the target surface in obstructed line-of-sight conditions, thereby improving accuracy and reducing rework relative to direct projection onto the target surface.

The disclosed subject matter is directed to specific technical implementations that integrate physical projection hardware, a physically generated laser reference plane, and a jig having detection and indication structure to achieve a concrete improvement in construction layout transfer under occlusion, rather than to an abstract idea performed on generic computing equipment.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

In the foregoing detailed description, numerous specific details are set forth in order to provide an understanding of the invention. However, it will be understood by those skilled in the art that the invention can be practiced without these specific details. In other instances, well-known methods, procedures, and components, modules, units, and/or circuits have not been described in detail so as not to obscure the invention. Some features or elements described with respect to one embodiment can be combined with features or elements described with respect to other embodiments.

## Claims

1. A system for projecting content onto a surface at a construction site, said system comprising:
a low divergence light source projector having a known position and orientation at the construction site;
a laser level arranged to produce a virtual laser plane substantially parallel to the surface; and
a jig,
wherein the low divergence light source projector is arranged to project content onto an intersection point of the virtual laser plane and a straight line substantially perpendicular to the virtual surface and coming from a position on the surface intended for the projected content, and
wherein the jig comprises:
means for identifying said intersection point; and
means for indicating the position on the surface intended for the projected content, or a reference point having a known offset to said position on the surface

2. The system of claim 1, wherein the jig comprises a distal end configured for placement at the intersection point and a proximal end configured to point toward the surface to indicate the intended location.

3. The system of claim 1, wherein the jig comprises a detector configured to detect overlap between (a) the projected beam from the projector and (b) a beam of the laser level defining the virtual reference plane.

4. The system of claim 3, wherein the detector comprises at least one of: a photosensor, a camera, a quadrant photodiode, or an optical filter configured to discriminate between wavelengths of the projector and the laser level.

5. The system of claim 1, wherein the jig comprises an indicator configured to output a marking beam toward the surface to indicate the intended location or a reference location having a known spatial offset from the intended location.

6. The system of claim 5, wherein the marking beam is substantially perpendicular to a longitudinal axis of the jig when the jig is positioned at the intersection point.

7. The system of claim 1, wherein the jig comprises a leveling element configured to assist alignment of the jig along the line substantially perpendicular to the virtual reference plane, the leveling element comprising at least one of: a bubble level, a plumb bob, an inertial measurement unit, or a gravity-referenced electronic level.

8. The system of claim 1, wherein the laser level is configured to generate the virtual reference plane substantially parallel to the surface.

9. The system of claim 1, further comprising a controller configured to compute, from a model of the construction plan and a known pose of the projector, a point on the virtual reference plane that corresponds to the intended location on the surface, and to command the projector to project the content at said point on the virtual reference plane.

10. The system of claim 9, wherein the controller is further configured to compute and present, to an operator, instructions for moving the jig until the jig detects the intersection point.

11. The system of claim 1, wherein the jig is a hand-held stick-like device having a distal end for placement at the intersection point and a proximal end for indicating the intended location on the surface.

12. A method of projecting content onto a surface at a construction site, said method comprising:
providing a low divergence light source projector having a known position and orientation at the construction site;
providing a laser level arranged to produce a virtual laser plane substantially parallel to the surface;
instructing the low divergence light source projector to project content onto an intersection point of the virtual laser plane and a straight line substantially perpendicular to the virtual surface and coming from a position on the surface intended for the projected content;
identifying, using a jig, said intersection point; and
indicating, using the jig, the position on the surface intended for the projected content, or a reference point having a known offset to said position on the surface.

13. The method of claim 12, wherein positioning the jig at the intersection point comprises placing a distal end of the jig at a location where a beam from the projector overlaps a beam defining the virtual reference plane.

14. The method of claim 12, wherein positioning the jig at the intersection point comprises detecting, using a sensor of the jig, overlap between a beam from the projector and a beam of the laser level.

15. A non-transitory computer-readable medium having instructions stored thereon that, when executed by one or more processors, cause the one or more processors to:
obtain a pose of a projector at a construction site;
obtain a definition of a virtual reference plane generated by a laser level at the construction site;
obtain an intended location on a surface at the construction site for projected content;
compute an intersection point on the virtual reference plane corresponding to the intended location along a line substantially perpendicular to the virtual reference plane; and
command the projector to project the content at the intersection point on the virtual reference plane.
